# EUROPEAN PATENT SPECIFICATION

(11) **EP 4 008 518 B1**
(45) Date of publication and mention of the grant of the patent: **01.01.2025**
(21) Application number: 21210750.2
(22) Date of filing: 26.11.2021
(51) Int. Cl.: B29C 45/56, B29C 45/82, B29C 45/68, B29K 105/00

(54) **INJECTION MOLDING PRESS FOR MOLDING PREFORMS**
SPRITZGIESSPRESSE ZUR FORMUNG VON VORFORMLINGEN
PRESSE DE MOULAGE PAR INJECTION POUR LE MOULAGE DE PRÉFORMES

(30) Priority: 01.12.2020 IT 202000029177
(43) Date of publication of application: 08.06.2022
(73) Proprietor: Sacmi Imola S.C., 40026 Imola (IT)
(72) Inventor: PENAZZI, Davide, 40026 Imola BO (IT); TONDINI, Fabio, 48012 Bagnacavallo RA (IT); SALIERI, Marco, 40026 Imola BO (IT); SÜß, Peter, 64409 Messel (DE)
(74) Representative: Modiano, Micaela Nadia

(56) References cited:
- WO-A1-02/058909
- WO-A1-2007/039766
- WO-A1-2009/103805
- JP-A- 2010 094 886
- JP-A- H09 198 722
- US-A- 5 580 585

## Description

The present invention relates to an injection molding press for molding preforms.

Injection molding presses for molding preforms are known, which comprise a supporting footing for a molding device which comprises a fixed mold part and a movable mold part.

The movable mold part is supported so that it can slide with respect to the footing, in order to pass on command between a condition in which it is close to the fixed mold part, in which it cooperates therewith to define the injection cavities of the preforms, and a spaced-apart condition, in which the mold is open and the operations are permitted to extract the preforms from the mold parts.

Typically, the known injection molding presses further comprise a device for removing the preforms molded by the molding device.

The molding device is associated with an extraction plate, which is adapted to move, on command, at least one part of the molding device in order to allow the removal of the molded preforms.

The extraction plate is functionally connected, through kinematic connection means, to an actuation element.

The press is furthermore provided with an abutment body and actuation means, which act between the abutment body and the actuation element.

In particular, the actuation means are adapted to move, substantially in parallel to the direction of extension of the pusher and traction posts, the actuation element with respect to the abutment body so as to actuate, by way of the pusher and traction posts, the extraction plate.

Once extracted, the preforms are picked up by a grip plate, which can move along a horizontal direction transversely with respect to the movement direction of the movable mold part, in order to be brought outside the mold and then removed.

With particular reference to what is known as the "extraction plate", it should be noted that this is associated with a hydraulic actuation circuit which is configured to move on command a series of actuator elements which are adapted to allow the removal of the preforms from the mold parts.

The known solutions present a certain complexity from the point of view of construction, as they do not allow optimization of the molding process. WO2007/039766A1 discloses an injection molding press in accordance with the preamble of claim 1.

The aim of the present invention is to provide an injection molding press for molding preforms which is capable of improving the known art in one or more of the above-mentioned aspects.

Within this aim, an object of the invention is to make available an injection molding press for molding preforms that is capable of moving, even during the step of molding, portions of the movable mold part, so as to optimize the molding operations.

Another object of the invention is to provide an injection molding press for molding preforms that is highly reliable, easy to implement and low-cost.

This aim and these and other objects which will become more apparent hereinafter are achieved by an injection molding press for molding preforms according to claim 1, optionally provided with one or more of the characteristics of the dependent claims.

Further characteristics and advantages of the invention will become more apparent from the description of some preferred, but not exclusive, embodiments of the injection molding press for molding preforms according to the invention, which are illustrated for the purposes of non-limiting example in the accompanying drawings wherein:

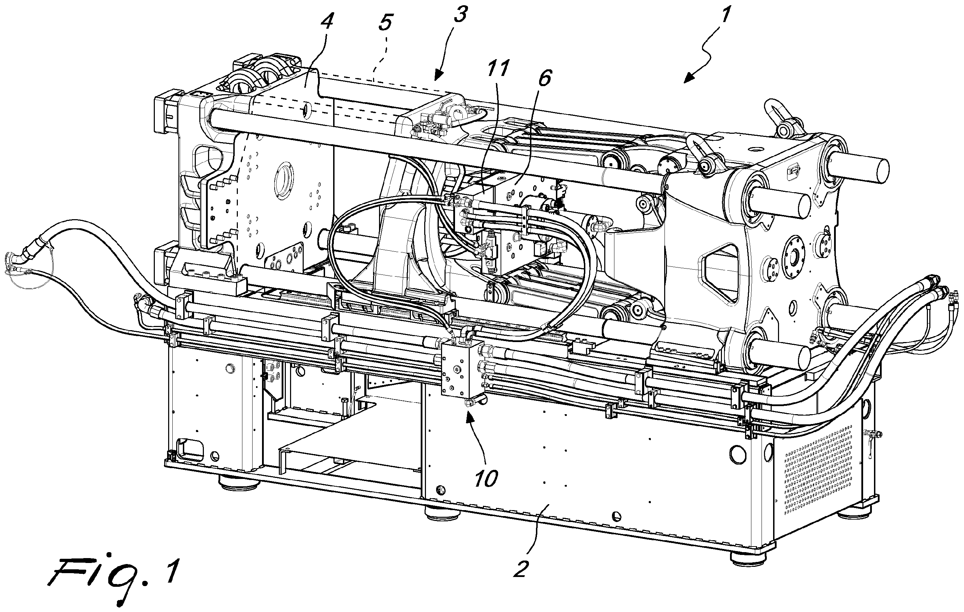

Figure 1 is a perspective view of an injection molding press for molding preforms according to the invention;

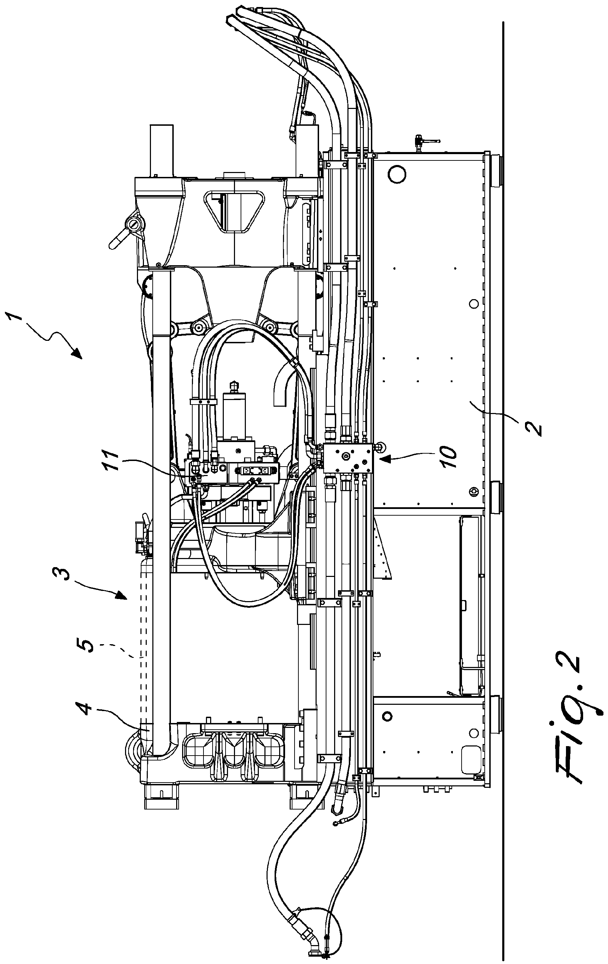

Figure 2 is a side view of the injection molding press for molding preforms of Figure 1.

With reference to the figures, the injection molding press according to the invention, generally designated by the reference numeral 1, for molding preforms comprises a supporting footing 2 for a molding device 3.

The molding device 3 comprises a fixed mold part 4 and a movable mold part 5.

The movable mold part 5 is supported so that it can slide along a movement direction 100 with respect to the footing 2 in order to pass on command between a condition in which it is close to the fixed mold part 4, in which it cooperates with the fixed mold part 4 to define the injection cavities of the preforms and in which the molding device 3 is in the closed condition, and a spaced-apart condition, in which the molding device 3 is in the open condition.

The movable mold part 5 is associated with an extraction plate 6, which is configured to perform the operations to extract the preforms from the mold parts 4, 5 when the molding device 3 is in the open condition.

The injection molding press 1 is provided with a hydraulic actuation circuit 10, which is configured to actuate at least one actuator associated with the extraction plate and/or the movable mold part 5.

The movable mold part 5 comprises a plurality of plungers which define respective male elements which cooperate with respective female elements supported by the fixed mold part 4 in order to define respective molding cavities of the preforms.

According to the present invention, the plunger elements are associated with means for movement on command for their movement when the molding device 3 is in the closed condition.

In particular, the means for movement are adapted to allow such movement with respect to the movable mold part 5 along a direction that is substantially parallel to the movement direction 100 of the movable mold part 5.

The means for movement on command of the plungers comprise, in particular, a hydraulic actuation unit 11, which is connected to the hydraulic actuation circuit 10.

Advantageously, the hydraulic actuation unit 11 is supported by the movable mold part 5.

The hydraulic actuation unit 11 may also be integral with a supporting body associated with the extraction plate 6.

Conveniently, the hydraulic actuation unit 11 is configured to actuate the movement of the plungers with respect to the movable mold part 5 in the direction of approaching the bottom of the respective female element.

There is no reason why such hydraulic actuation unit 11 could not be configured to actuate the movement of the plungers in the opposite direction as well, and therefore away from the bottom of the respective female element.

It has been found that the positioning of the hydraulic actuation unit 11 proximately to the plungers, and therefore on the movable mold part 5 or on the extraction plate 6, ensures the rapidity necessary for the movement of the plunger, and therefore the optimization of the molding step.

In a possible variation of embodiment, the hydraulic actuation unit 11 can also be decoupled from the hydraulic actuation circuit 10.

In this case, the hydraulic actuation unit 11 can also be arranged in different positions, and even separated from the footing 2 and from the molding device 3, and connected, with suitable pipes, to a valve which is supported directly by the movable mold part 5.

According to a preferred embodiment, the hydraulic actuation unit 11 comprises at least one hydraulically-actuated cylinder which is functionally connected to a bistable valve.

The injection molding press 1 comprises, conveniently, an actuation and control device for the step of injection molding of the preforms.

Conveniently, the hydraulic actuation unit 11 is functionally associated with the actuation and control device so that the movement of the plungers is phased based on the cycle of injection molding of the preform.

The operation of the injection molding press 1, according to the invention, is evident from the foregoing description.

In particular, during the step of molding the preform, and therefore with the molding device 3 in the closed condition, the hydraulic actuation unit 11, which is functionally associated with the hydraulic circuit 10 that already takes care of actuating the actuators of the extraction plate 6 and/or of the movable mold part 5, actuates the shifting, with respect to the movable mold part 5, of the plungers so as to optimize the molding process.

In practice it has been found that the invention fully achieves the intended aim and objects by providing an injection molding press that performs extremely well and is capable of optimizing the molding process.

The invention, thus conceived, is susceptible of numerous modifications and variations, all of which are within the scope of the appended claims.

In practice the materials employed, provided they are compatible with the specific use, and the contingent dimensions and shapes, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An injection molding press (1) for molding preforms, which comprises a supporting footing (2) for a molding device (3) which comprises a fixed mold part (4) and a movable mold part (5), said movable mold part (5) being supported so that it can slide along a movement direction (100) with respect to the footing (2) in order to pass on command between a condition in which it is close to the fixed mold part (4), in which it cooperates with said fixed mold part (4) to define the injection cavities of said preforms and in which said molding device (3) is in the closed condition, and a spaced-apart condition, in which said molding device (3) is in the open condition, said movable mold part being associated with an extraction plate (6) configured to perform the operations to extract said preforms from said mold parts (4, 5) with said molding device in the open condition, a hydraulic actuation circuit (10) being provided which is configured to actuate at least one actuator associated with said extraction plate and/or said movable mold part (5), said movable mold part (5) comprising a plurality of plungers which define respective male elements which cooperate with respective female elements supported by said fixed mold part (4) in order to define respective molding cavities of said preforms, **characterized in that** said plunger elements are associated with means for movement on command for their movement, when said molding device (3) is in the closed condition, along a direction that is substantially parallel to the movement direction (100) of said movable mold part (5), said means for movement on command of said plungers comprising a hydraulic actuation unit (11) connected to said hydraulic actuation circuit (10).

2. The injection molding press (1) according to claim 1, **characterized in that** said hydraulic actuation unit (11) is supported by said movable mold part (5).

3. The injection molding press (1) according to claim 1, **characterized in that** said hydraulic actuation unit (11) is integral with a supporting body associated with said extraction plate (6).

4. The injection molding press (1) according to one or more of the preceding claims, **characterized in that** said hydraulic actuation unit (11) is configured to actuate the movement of said plungers in the direction of approaching the bottom of the respective female element.

5. The injection molding press (1) according to one or more of the preceding claims, **characterized in that** said hydraulic actuation unit (11) comprises at least one hydraulically-actuated cylinder which is functionally connected to a bistable valve.

6. The injection molding press (1) according to one or more of the preceding claims, **characterized in that** it comprises an actuation and control device for the step of injection molding of said preforms, said hydraulic actuation unit being functionally associated with said actuation and control device.

## Patentansprüche

1. Eine Spritzgießpresse (1) zur Formung von Vorformlingen, die eine tragende Basis (2) für eine Formvorrichtung (3) umfasst, welche einen festen Formteil (4) und einen beweglichen Formteil (5) umfasst; wobei der bewegliche Formteil (5) so gelagert ist, dass er entlang einer Bewegungsrichtung (100) mit Bezug auf die Basis (2) gleiten kann, um sich auf Befehl zwischen einem Zustand, in welchem er nahe dem festen Formteil (4) ist, in welchem er mit dem festen Formteil (4) zusammenwirkt, um die Einspritzhohlräume der Vorformlinge zu bestimmen, und in welchem sich die Formvorrichtung (3) im geschlossenen Zustand befindet, und einem beabstandeten Zustand zu bewegen, in dem sich die Formvorrichtung (3) im offenen Zustand befindet; wobei der bewegliche Formteil mit einer Extraktionsplatte (6) verbunden ist, die ausgebildet ist, um die Arbeiten zur Extraktion der Vorformlinge aus den Formteilen (4, 5) durchzuführen, wenn die Formvorrichtung sich im offenen Zustand befindet; wobei eine hydraulische Antriebsschaltung (10) bereitgestellt ist, die ausgebildet ist, um mindestens ein mit der Extraktionsplatte und/oder dem beweglichen Formteil (5) verbundenes Antriebselement zu betätigen; wobei der bewegliche Formteil (5) eine Vielzahl von Plungern umfasst, die entsprechende vorstehende Elemente bestimmen, welche mit entsprechenden aufnehmenden Elementen zusammenwirken, die auf dem festen Formteil (4) gelagert sind, um entsprechende Formhohlräume der Vorformlinge zu bestimmen; **dadurch gekennzeichnet, dass** die Plungerelemente mit Mitteln zur Bewegung auf Befehl zum Zwecke ihrer Bewegung, wenn die Formvorrichtung (3) im geschlossenen Zustand ist, entlang einer Richtung verbunden sind, die im Wesentlichen parallel zur Bewegungsrichtung (100) des beweglichen Formteils (5) ist; wobei die Mittel zur Bewegung der Plunger auf Befehl eine hydraulische Antriebseinheit (11) umfassen, die mit der hydraulischen Antriebsschaltung (10) verbunden ist.

2. Die Spritzgießpresse (1) gemäß Anspruch 1, **dadurch gekennzeichnet, dass** die hydraulische Antriebseinheit (11) von dem beweglichen Formteil (5) getragen ist.

3. Die Spritzgießpresse (1) gemäß Anspruch 1, **dadurch gekennzeichnet, dass** die hydraulische Antriebseinheit (11) integral mit einem tragenden Körper ist, der mit der Extraktionsplatte (6) verbunden ist.

4. Die Spritzgießpresse (1) gemäß einem oder mehreren der obigen Ansprüche, **dadurch gekennzeichnet, dass** die hydraulische Antriebseinheit (11) ausgebildet ist, um die Bewegung der Plunger in Richtung der Annäherung an den Boden des entsprechenden aufnehmenden Elements anzutreiben.

5. Die Spritzgießpresse (1) gemäß einem oder mehreren der obigen Ansprüche, **dadurch gekennzeichnet, dass** die hydraulische Antriebseinheit (11) mindestens einen hydraulisch angetriebenen Zylinder umfasst, der funktionell mit einem bistabilen Ventil verbunden ist.

6. Die Spritzgießpresse (1) gemäß einem oder mehreren der obigen Ansprüche, **dadurch gekennzeichnet, dass** sie eine Antriebs- und Steuervorrichtung für den Schritt des Spritzgießens der Vorformlinge umfasst; wobei die hydraulische Antriebseinheit funktionell mit der Antriebs- und Steuervorrichtung verbunden ist.

## Revendications

1. Presse de moulage par injection (1) pour mouler des préformes, qui comprend un socle de support (2) pour un dispositif de moulage (3) qui comprend une partie de moule fixe (4) et une partie de moule mobile (5), ladite partie de moule mobile (5) étant supportée, de sorte qu'elle peut coulisser le long d'une direction de déplacement (100) par rapport au socle (2) afin de passer, sur commande, entre une condition dans laquelle elle est proche de la partie de moule fixe (4), dans laquelle elle coopère avec ladite partie de moule fixe (4) pour définir des cavités d'injection desdites préformes et dans laquelle ledit dispositif de moulage (3) est dans la condition fermée, et une condition espacée, dans laquelle ledit dispositif de moulage (3) est dans la condition ouverte, ladite partie de moule mobile étant associée avec une plaque d'extraction (6) configurée pour réaliser les opérations pour extraire lesdites préformes desdites parties de moule (4, 5) avec ledit dispositif de moulage dans la condition ouverte, on prévoit un circuit d'actionnement hydraulique (10) qui est configuré pour actionner au moins un actionneur associé avec ladite plaque d'extraction et/ou ladite partie de moule mobile (5), ladite partie de moule mobile (5) comprenant une pluralité de pistons plongeurs qui définissent des éléments mâles respectifs qui coopèrent avec des éléments femelles respectifs supportés par ladite partie de moule fixe (4) afin de définir des cavités de moulage respectives desdites préformes, **caractérisé en ce que** lesdits éléments de piston plongeur sont associés avec des moyens pour le mouvement, sur commande, de leur mouvement, lorsque ledit dispositif de moulage (3) est dans la condition fermée, le long d'une direction qui est sensiblement parallèle à la direction de mouvement (100) de ladite partie de moule mobile (5), lesdits moyens pour le mouvement, sur commande, desdits pistons plongeurs comprenant une unité d'actionnement hydraulique (11) raccordée audit circuit d'actionnement hydraulique (10).

2. Presse de moulage par injection (1) selon la revendication 1, **caractérisée en ce que** ladite unité d'actionnement hydraulique (11) est supportée par ladite partie de moule mobile (5).

3. Presse de moulage par injection (1) selon la revendication 1, **caractérisée en ce que** ladite unité d'actionnement hydraulique (11) est solidaire avec un corps de support associé avec ladite plaque d'extraction (6).

4. Presse de moulage par injection (1) selon une ou plusieurs des revendications précédentes, **caractérisée en ce que** ladite unité d'actionnement hydraulique (11) est configurée pour actionner le mouvement desdits pistons plongeurs dans la direction d'approche du fond de l'élément femelle respectif.

5. Presse de moulage par injection (1) selon une ou plusieurs des revendications précédentes, **caractérisée en ce que** ladite unité d'actionnement hydraulique (11) comprend au moins un cylindre actionné par voie hydraulique qui est fonctionnellement raccordé à une valve bistable.

6. Presse de moulage par injection (1) selon une ou plusieurs des revendications précédentes, **caractérisée en ce qu'**elle comprend un dispositif d'actionnement et de commande pour l'étape consistant à mouler par injection lesdites préformes, ladite unité d'actionnement hydraulique étant fonctionnellement associée audit dispositif d'actionnement et de commande.
